# EUROPÄISCHE PATENTANMELDUNG

(11) **EP 4 651 348 A1**
(43) Veröffentlichungstag der Anmeldung: **19.11.2025**
(21) Anmeldenummer: 25174335.7
(22) Anmeldetag: 05.05.2025
(51) Int. Cl.: H02K 11/01, H02K 5/08

(54) **GEHÄUSETEIL, VORZUGSWEISE MOTORGEHÄUSETEIL, ZUM ZUMINDEST ABSCHNITTSWEISEN UMSCHLIESSEN EINER VORRICHTUNG, VORZUGSWEISE EINES ELEKTROMOTORS**

(30) Priorität: 14.05.2024 DE 102024204441
(71) Anmelder: ContiTech Vibration Control GmbH, 30175 Hannover (DE)
(72) Erfinder: Schneider, Diethard, 30175 Hannover (DE); Busch, Jirka, 30175 Hannover (DE)
(74) Vertreter: Preusser, Andrea

(57) **Zusammenfassung**

Die vorliegende Erfindung betrifft ein Gehäuseteil (1a, 1b, 1c), vorzugsweise ein Motorgehäuseteil (1a, 1b, 1c), zum zumindest abschnittsweisen Umschließen einer Vorrichtung, vorzugsweise eines Elektromotors, mit wenigstens einem ersten Kunststoffelement (10) und mit wenigstens einem Einlegeelement (11), welche feststehend miteinander verbunden und ausgebildet sind, die Vorrichtung zumindest abschnittsweise zu umschließen, wobei das Einlegeelement (11) elektrisch und/oder magnetisch abschirmend ausgebildet ist.

## Beschreibung

Die vorliegende Erfindung betrifft ein Gehäuseteil, vorzugsweise ein Motorgehäuseteil, zum zumindest abschnittsweisen Umschließen einer Vorrichtung, vorzugsweise eines Elektromotors.

Heutzutage werden zunehmend elektrisch betriebene Autos bzw. Fahrzeuge, auch Elektroauto, E-Auto oder elektrisches Auto genannt, beispielsweise für die Mobilität von Personen im eigenen Personenkraftwagen (Pkw), für die Beförderung von Personen in Bussen sowie für die Beförderung von Gütern in Transportern oder Lastkraftwagen (Lkw) verwenden. Unter einem Elektroauto wird dabei im weitesten Sinne ein Automobil verstanden, welches mindestens einen Elektromotor zum Antrieb verwendet, was grundsätzlich auch Hybridautos und Brennstoffzellenautos einschließt. Elektroautos, welche ausschließlich elektrisch angetrieben werden und die entsprechende elektrische Energie aus der eigenen Batterie beziehen, können als batterieelektrische Autos bzw. batterieelektrische Elektroautos bezeichnet werden.

Nachteilig ist bei der Verwendung von Elektroautos, dass insbesondere im Betrieb und beim Laden der Fahrzeuge elektrische und magnetische Felder, einzeln oder als elektromagnetische Felder miteinander gekoppelt, auftreten, wobei unter Strahlenschutzgesichtspunkten eher die magnetischen Felder relevant sind. Beim Betrieb von Elektrofahrzeugen bzw. von Elektroautos sind Batterie, Elektromotor und Kabel von elektrischen und magnetischen Feldern umgeben.

Elektromagnetische Strahlen sind somit ein Teil eines jeden Elektroautos. Elektroautos emittieren daher Elektrosmog. Der Elektrosmog kann umliegende technische Bauteile sowie zumindest empfindliche Personen stören.

Somit ist es bei vielen Herstellern von Elektroautos das Ziel, die Elektroautos so auszulegen, dass ein Elektroauto möglichst wenig elektrische und bzw. oder magnetische Strahlung abgibt.

Bisher werden zu diesem Zweck diejenigen Bauteile des Elektroautos, welche elektrische und bzw. oder magnetische Strahlung erzeugen wie insbesondere Batterie, Elektromotor und Kabel, entsprechend isoliert und hierzu mit einer Ummantelung umgeben. Beim Antriebsmotor wird diese bereits im Regelfall durch den Einsatz von Motorgehäusen aus Werkstoffen wie Stahl, Aluminium, Magnesium, usw. erzielt, welche wenig durchlässig für elektrische und bzw. oder magnetische Strahlung sind und somit die elektrische und bzw. oder magnetische Strahlung im Bauteil zumindest im Wesentlichen zurückhalten bzw. zumindest möglichst wenig nach außen dringen lassen.

Nachteilig hieran ist, dass die heutigen Motorgehäuse aus Stahl, Aluminium oder Magnesium relativ schwer und teuer sind. Das durch diesen Strahlenschutz bedingte zusätzliche Gewicht wirkt sich dabei auch reduzierend auf die verfügbare Reichweite des Elektrofahrzeugs aus, was gerade bei batterieelektrischen Elektroautos relevant ist.

Werden Motorgehäuse stattdessen aus Kunststoff gefertigt, können die Nachteile des Gewichtes und der hohen Fertigungskosten ausgeglichen werden. Durch das sehr gute Dämpfungsverhalten von Kunststoffen können ferner insbesondere hochfrequente Übertragungen reduziert werden, welche wiederum zu einer angenehmeren Akustik des Fahrzeuges führt.

Nachteilig an Motorgehäusen aus Kunststoff ist jedoch die höhere Durchlässigkeit an elektromagnetischen Strahlen, was zu den zuvor erwähnten ungewünschten Auswirkungen führen kann.

Eine Aufgabe der vorliegenden Erfindung ist es, die Möglichkeiten der elektrischen und bzw. oder magnetischen Abschirmung für Vorrichtungen allgemein und insbesondere für Elektromotoren zu verbessern. Dies soll möglichst einfach, kostengünstig, kompakt, leicht und bzw. oder flexibel einsetzbar erfolgen. In jedem Fall soll wenigstens eine Alternative zu den bekannten Möglichkeiten geschaffen werden.

Die Aufgabe wird erfindungsgemäß durch ein Gehäuseteil, durch ein Gehäuse, durch eine Vorrichtung sowie durch eine Maschine oder Anlage gemäß der unabhängigen Ansprüche gelöst. Vorteilhafte Weiterbildungen sind in den Unteransprüchen beschrieben.

Somit betrifft die vorliegende Erfindung ein Gehäuseteil, vorzugsweise ein Motorgehäuseteil, zum zumindest abschnittsweisen Umschließen einer Vorrichtung, vorzugsweise eines Elektromotors, mit wenigstens einem ersten Kunststoffelement und mit wenigstens einem Einlegeelement, welche feststehend miteinander verbunden und ausgebildet sind, die Vorrichtung zumindest abschnittsweise zu umschließen, wobei das Einlegeelement elektrisch und bzw. oder magnetisch abschirmend ausgebildet ist.

Als erstes Kunststoffelement kann ein Körper aus jeglichem geeigneten Material verwendet werden, je nach den Anforderungen der jeweiligen Anwendung des Gehäuseteils bzw. des entsprechenden Gehäuses. Insbesondere kann das erste Kunststoffelement ein Spritzgussteil sein. In jedem Fall weist das erste Kunststoffelement bzw. dessen Material vorzugsweise lediglich eine geringe elektrisch und bzw. oder magnetisch abschirmende Wirkung auf.

Als Einlegeelement kann ein Körper aus jeglichem geeigneten Material verwendet werden, welche eine signifikante bzw. verbessernde elektrisch und bzw. oder magnetisch abschirmende Wirkung auf das Gehäuseteil gegenüber dem ersten Kunststoffelement haben kann. Insbesondere kann das Einlegeelement hierzu zumindest abschnittweise metallisch, ob massiv bzw. durchgängig oder als Gewebe, Geflecht, Netz oder dergleichen, ausgebildet sein.

Im Falle eines Spritzgussteils kann das erste Kunststoffelement fertig als Halbzeug ausgebildet und nachfolgend mit dem ebenfalls als Halbzeug hergestellten bzw. vorgeformten Einlegeelement, insbesondere als Blechformelement, zusammengefügt werden, insbesondere stoffschlüssig wie insbesondere durch Kleben. Im Falle der Verwendung eines weiteren zweiten Kunststoffelements kann dieses ebenfalls als Halbzeug hergestellt und anschließend dem ersten Kunststoffelement gegenüberliegend mit dem Einlegeelement zusammengefügt werden, insbesondere ebenfalls stoffschlüssig wie insbesondere durch Kleben.

Alternativ kann das als Halbzeug hergestellte bzw. vorgeformte Einlegeelement, insbesondere als Blechformelement, in die Spritzgussform eingelegt und dort direkt stoffschlüssig mit dem Material des ersten Kunststoffelements verbunden werden. Auch kann das Einlegeelement unverformt in die Spritzgussform eingelegt und durch das Schließen des Spritzgusswerkzeugs in die gewünschte Form gebracht sowie anschließend mit dem Kunststoffmaterial verbunden werden. In jedem Fall kann das Einlegeelement vorzugsweise zumindest abschnittsweise von dem Material des ersten Kunststoffelements beidseitig umschlossen und bzw. oder abschnittsweise durchdrungen werden, was den stoffschlüssigen Halt verbessern sowie um einen formschlüssigen Halt ergänzen kann. In jedem Fall kann die Oberfläche des Einlegeelements vorab behandelt, insbesondere mit einem Haftvermittle versehen, worden sein, um die stoffschlüssige Verbindung mit dem Material des ersten Kunststoffelements zu verbessern.

Der vorliegenden Erfindung liegt dabei die Erkenntnis zugrunde, dass das Problem der Durchlässigkeit von elektrischen, magnetischen und bzw. oder elektromagnetischen Strahlen durch ein Gehäuseteil hindurch durch die Kombination von einem abschirmenden Einlegeelement, insbesondere als dünner Stahleinleger, und einem Kunststoffgehäusen gelöst oder zumindest reduziert werden kann. Hierbei wird die eigentliche Bauteilkontur und Funktion vom ersten Kunststoffelement gebildet und das Einlegeelement reduziert die Durchlässigkeit von Strahlen.

Zusätzlich kann das Einlegelement, insbesondere als metallisches Bauteil, das Gehäuseelement bzw. dessen erstes Kunststoffelement versteifen, wodurch es zu einem festeren und steiferen Gehäuse als Gesamtbauteil kommen kann.

Gemäß einem Aspekt der Erfindung weist das Einlegeelement ein Einlegeblech auf, vorzugsweise ist das Einlegeelement als Einlegeblech ausgebildet. Dies kann eine konkrete Möglichkeit der Umsetzung darstellen, wie zuvor bereits erwähnt.

Gemäß einem weiteren Aspekt der Erfindung weist das Einlegeelement einen Draht, vorzugsweise ein Drahtgeflecht, auf, vorzugsweise ist das Einlegeelement als Draht, vorzugweise als Drahtgeflecht, ausgebildet. Insbesondere kann der Draht bzw. das Drahtgeflecht in eine Matrix, insbesondere aus Kunststoff, eingebettet sein.

Dies kann eine konkrete Möglichkeit der Umsetzung darstellen, wie zuvor bereits erwähnt. Dies kann den Anteil des Einlegeelements am Gehäuseelement geringhalten, ohne die abschirmende Wirkung zu reduzieren. Auch kann hierdurch ein flexibel verformbares Einlegeelement geschaffen werden, relativ zu einem massiven Blech oder dergleichen betrachtet.

Gemäß einem weiteren Aspekt der Erfindung ist das Einlegeelement aus Stahl, Aluminium oder Magnesium ausgebildet. Dies können konkrete Möglichkeiten der Umsetzung darstellen.

Gemäß einem weiteren Aspekt der Erfindung sind das erste Kunststoffelement und das Einlegeelement flächig stoffschlüssig miteinander verbunden. Dies kann eine konkrete Möglichkeit der Umsetzung darstellen, wie zuvor bereits erwähnt. Dies kann zu einer sicheren bzw. dauerhaften Verbindung führen.

Gemäß einem weiteren Aspekt der Erfindung ist das erste Kunststoffelement innenseitig und das Einlegeelement außenseitig angeordnet, oder umgekehrt. Dies kann eine konkrete Möglichkeit der Umsetzung darstellen. Bei innenseitiger Anordnung des Einlegeelements kann dieses durch das erste Kunststoffelement vor äußeren Einflüssen geschützt werden.

Gemäß einem weiteren Aspekt der Erfindung umschließt das erste Kunststoffelement das Einlegeelement zumindest abschnittsweise, vorzugsweise zumindest im Wesentlichen, beidseitig. Dies kann eine konkrete Möglichkeit der Umsetzung darstellen, wie zuvor bereits erwähnt. Dies kann den Halt verbessern bzw. für einen sicheren und dauerhaften Halt sorgen.

Gemäß einem weiteren Aspekt der Erfindung durchdringt das erste Kunststoffelement das Einlegeelement abschnittsweise. Dies kann eine konkrete Möglichkeit der Umsetzung darstellen, wie zuvor bereits erwähnt. Dies kann den Halt verbessern bzw. für einen sicheren und dauerhaften Halt sorgen.

Gemäß einem weiteren Aspekt der Erfindung ist das Einlegeelement zumindest im Wesentlichen, vorzugsweise vollständig, in das erste Kunststoffelement eingebettet. Dies kann eine konkrete Möglichkeit der Umsetzung darstellen, wie zuvor bereits erwähnt. Dies kann den Halt verbessern bzw. für einen sicheren und dauerhaften Halt sorgen. Auch kann hierdurch das Einlegeelement vollständig bzw. vorflächig vor äußeren Einflüssen geschützt werden.

Gemäß einem weiteren Aspekt der Erfindung ist das Einlegeelement auf einer ersten flächigen Seite zumindest abschnittsweise, vorzugsweise zumindest im Wesentlichen, feststehend mit dem ersten Kunststoffelement verbunden und das Einlegeelement ist auf einer zweiten, der ersten Seite gegenüberliegenden flächigen Seite zumindest abschnittsweise, vorzugsweise zumindest im Wesentlichen, feststehend mit einem zweiten Kunststoffelement verbunden. Dies kann eine konkrete Möglichkeit der Umsetzung darstellen, wie zuvor bereits erwähnt. Auch kann hierdurch das Einlegeelement vollständig bzw. vorflächig vor äußeren Einflüssen geschützt werden.

Gemäß einem weiteren Aspekt der Erfindung ist das Einlegeelement zwischen dem ersten Kunststoffelement und dem zweiten Kunststoffelement mittig angeordnet. Dies kann eine konkrete Möglichkeit der Umsetzung darstellen. Dies kann eine gleich starke Verbindung beider Kunststoffelemente mit dem Einlegeelement bewirken und damit den sicheren Halt begünstigen.

Gemäß einem weiteren Aspekt der Erfindung weist das Einlegeelement eine Dicke von ca. 1 mm auf. Dies kann eine konkrete Möglichkeit der Umsetzung darstellen, um die abschirmende Wirkung sicherzustellen sowie die Stabilität des Gehäuseelements zu verbessern, ohne das Gewicht des Gehäuseelements unnötig zu erhöhen.

Die Erfindung betrifft auch ein Gehäuse, vorzugsweise ein Motorgehäuse, mit wenigstens einem Gehäuseteil wie zuvor beschrieben. Somit kann ein Gehäuse geschaffen werden, um die Eigenschaften und Vorteile des zuvor beschriebenen erfindungsgemäßen Gehäuseteils umzusetzen und zu nutzen.

Die Erfindung betrifft ferner eine Vorrichtung, vorzugsweise einen Elektromotor, mit wenigstens einem Gehäuse, vorzugsweise einem Motorgehäuse, wie zuvor beschrieben. Somit kann eine Vorrichtung geschaffen werden, um die Eigenschaften und Vorteile des zuvor beschriebenen erfindungsgemäßen Gehäuses umzusetzen und zu nutzen.

Die Erfindung betrifft des Weiteren eine Maschine oder Anlage, vorzugsweise ein Elektroauto, mit wenigstens einer Vorrichtung, vorzugsweise einem Elektromotor, wie zuvor beschrieben. Somit kann eine Maschine oder Anlage geschaffen werden, um die Eigenschaften und Vorteile der zuvor beschriebenen erfindungsgemäßen Vorrichtung umzusetzen und zu nutzen.

Mehrere Ausführungsbeispiele und weitere Vorteile der Erfindung werden nachstehend im Zusammenhang mit den folgenden Figuren erläutert. Darin zeigt:
- Fig. 1: eine seitliche schematische Darstellung eines erfindungsgemäßen Gehäuses eines erfindungsgemäßen Elektromotors für ein erfindungsgemäßes Elektroauto;
- Fig. 2: die Darstellung der Fig. 1 mit den drei Gehäuseteilen des Gehäuses zueinander beabstandet;
- Fig. 3: eine perspektivische Darstellung eines der beiden seitlichen Gehäuseteile des Gehäuses von außen;
- Fig. 4: eine perspektivische Darstellung eines der beiden seitlichen Gehäuseteile des Gehäuses von innen;
- Fig. 5: eine perspektivische Darstellung der Herstellung eines der beiden seitlichen Gehäuseteile des Gehäuses in einem zweiten Verfahrensschritt; und
- Fig. 6: eine perspektivische Darstellung der Herstellung eines der beiden seitlichen Gehäuseteile des Gehäuses in einem dritten Verfahrensschritt.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z, welche der Richtung der Schwerkraft entspricht. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

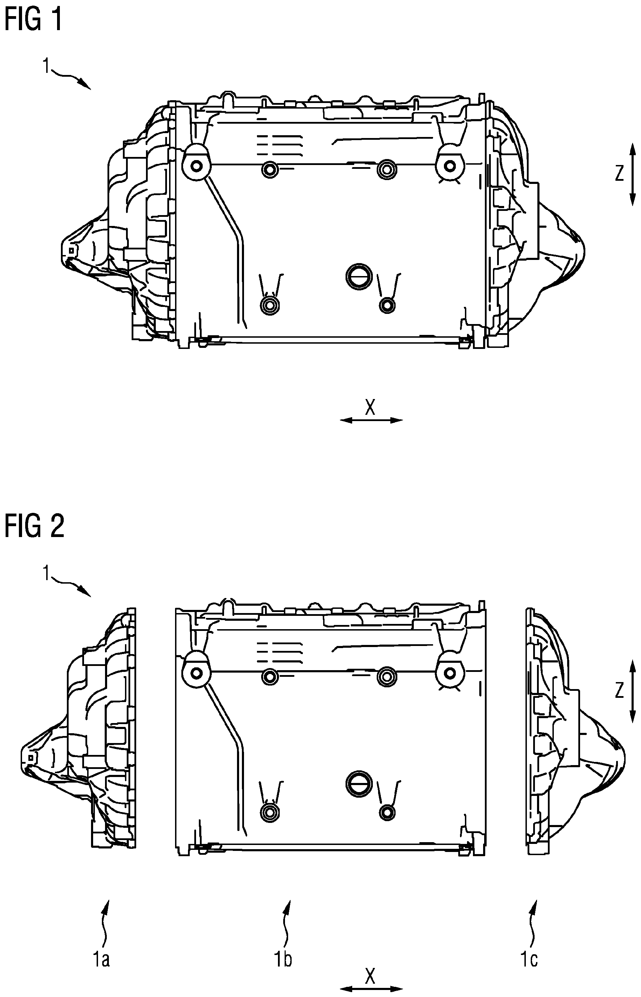

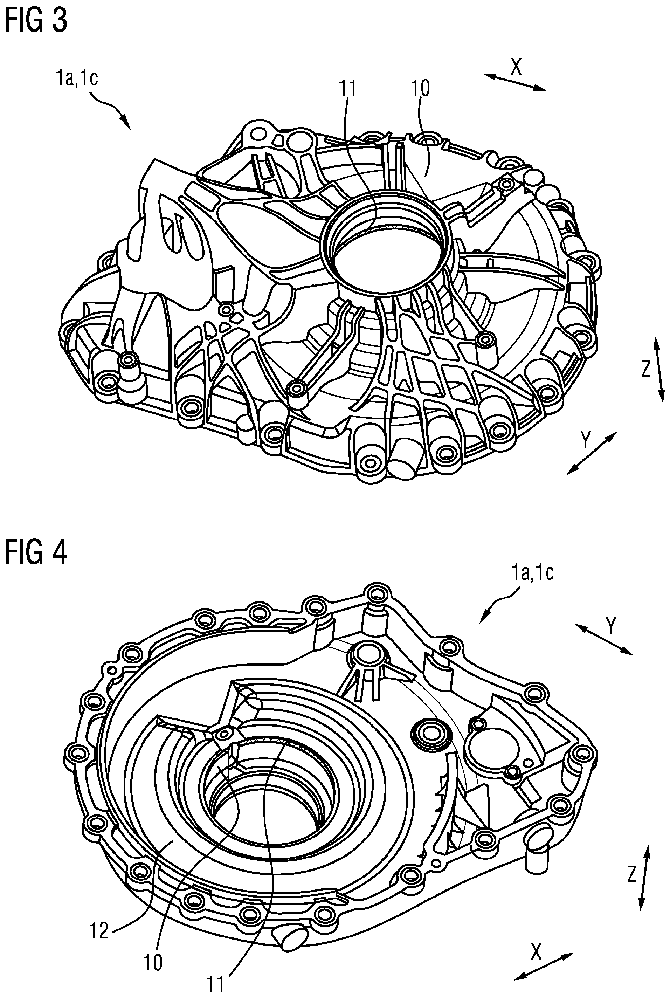

Fig. 1 zeigt eine seitliche schematische Darstellung eines erfindungsgemäßen Gehäuses 1 eines erfindungsgemäßen Elektromotors für ein erfindungsgemäßes Elektroauto. Fig. 2 zeigt die Darstellung der Fig. 1 mit den drei Gehäuseteilen 1a, 1b, 1c des Gehäuses 1 zueinander beabstandet. Fig. 3 zeigt eine perspektivische Darstellung eines der beiden seitlichen Gehäuseteile 1a, 1c des Gehäuses 1 von außen. Fig. 4 zeigt eine perspektivische Darstellung eines der beiden seitlichen Gehäuseteile 1a, 1c des Gehäuses 1 von innen.

Das Gehäuse 1 kann daher auch als Motorgehäuse 1 bezeichnet werden. Das erste, seitliche Gehäuseteil 1a kann auch als erstes, seitliches Motorgehäuseteil 1a, das zweite, mittlere Gehäuseteil 1b kann auch als zweites, mittleres Motorgehäuseteil 1b und das dritte, seitliche Gehäuseteil 1c kann auch als drittes, seitliches Motorgehäuseteil 1c bezeichnet werden.

Beide seitlichen Gehäuseteile 1a, 1c weisen ein erstes Kunststoffelement 10 und ein Einlegeelement 11 auf, welche feststehend miteinander verbunden und ausgebildet sind, den Elektromotor abschnittsweise zu umschließen, wobei das Einlegeelement 11 elektrisch und bzw. oder magnetisch abschirmend ausgebildet ist. Das Einlegeelement 11 ist auf einer ersten flächigen Seite im Wesentlichen feststehend mit dem ersten Kunststoffelement 10 verbunden. Das Einlegeelement 11 ist auf einer zweiten, der ersten Seite gegenüberliegenden flächigen Seite im Wesentlichen feststehend mit einem zweiten Kunststoffelement 12 verbunden. Das Einlegeelement 11 ist als Einlegeblech 11 aus dünnem Stahl von ca. 1 mm Dicke ausgebildet.

Hierdurch kann eine elektrische, magnetische bzw. elektromagnetische Abschirmung des Elektromotors gegenüber der Umgebung erreicht werden, um die entsprechende Strahlung aus der Umgebung fernzuhalten, d.h. die Umgebung des Elektromotors vor dessen Strahlung zu schützen.

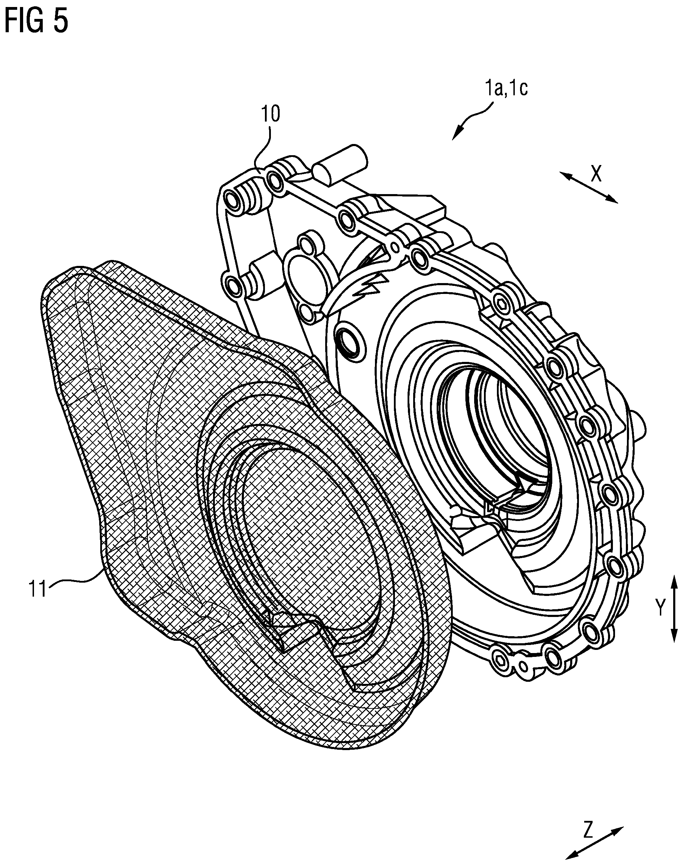

Zur Herstellung eines der beiden seitlichen Gehäuseteile 1a, 1c des Gehäuses 1 wird nun zuerst ein unverformtes flaches Blech des Einlegeelements 11 in die Form eines Spritzgusswerkzeugs gelegt und durch das Schließen bzw. durch das Zufahren des Spritzgusswerkzeugs als erster Verfahrensschritt in die gewünschte dreidimensionale Form gebracht, siehe Figur 5. Fig. 5 zeigt eine perspektivische Darstellung der Herstellung eines der beiden seitlichen Gehäuseteile 1a, 1c des Gehäuses 1 in einem zweiten Verfahrensschritt. Nun wird das Einlegeelement 11 von dem Kunststoffmaterial hinterspritzt, wodurch das erste Kunststoffelement 10 und das zweite Kunststoffelement 12 ausgebildet werden.

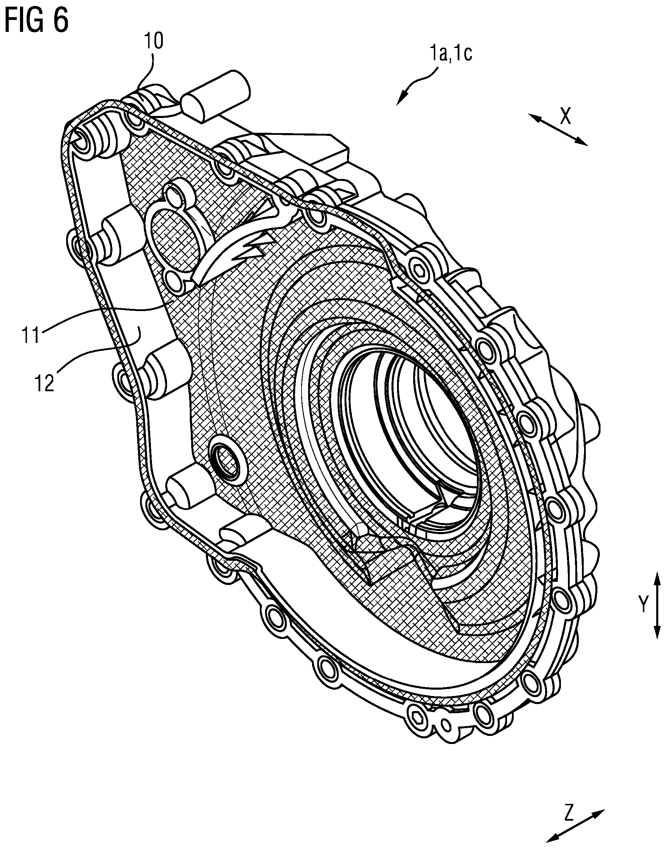

Fig. 6 zeigt eine perspektivische Darstellung der Herstellung eines der beiden seitlichen Gehäuseteile 1a, 1c des Gehäuses 1 in einem dritten Verfahrensschritt. Das seitliche Gehäuseteil 1a, 1c des Gehäuses 1 ist fertiggestellt. Das Einlegeelement 11 ist in dem Kunststoffmaterial eingebettet.

### Bezugszeichenliste (Teil der Beschreibung)

- X: Längsrichtung; Tiefe
- Y: Querrichtung; Breite
- Z: vertikale Richtung; Höhe
- X, Y: Horizontalen; horizontale Ebene

- 1: Gehäuse; Motorgehäuse
- 1a: erstes, seitliches Gehäuseteil; erstes, seitliches Motorgehäuseteil
- 1b: zweites, mittleres Gehäuseteil; zweites, mittleres Motorgehäuseteil
- 1c: drittes, seitliches Gehäuseteil; drittes, seitliches Motorgehäuseteil
- 10: erstes Kunststoffelement
- 11: Einlegeelement; Einlegeblech
- 12: zweites Kunststoffelement

## Patentansprüche

1. Gehäuseteil (1a, 1b, 1c), vorzugsweise Motorgehäuseteil (1a, 1b, 1c), zum zumindest abschnittsweisen Umschließen einer Vorrichtung, vorzugsweise eines Elektromotors,
mit wenigstens einem ersten Kunststoffelement (10) und
mit wenigstens einem Einlegeelement (11),
welche feststehend miteinander verbunden und ausgebildet sind, die Vorrichtung zumindest abschnittsweise zu umschließen,
wobei das Einlegeelement (11) elektrisch und/oder magnetisch abschirmend ausgebildet ist.

2. Gehäuseteil (1a, 1b, 1c) nach Anspruch 1,
wobei das Einlegeelement (11) ein Einlegeblech (1) aufweist, vorzugsweise als Einlegeblech (11) ausgebildet ist.

3. Gehäuseteil (1a, 1b, 1c) nach Anspruch 1 oder 2,
wobei das Einlegeelement (11) einen Draht, vorzugsweise ein Drahtgeflecht, aufweist, vorzugsweise als Draht, vorzugweise als Drahtgeflecht, ausgebildet ist.

4. Gehäuseteil (1a, 1b, 1c) nach einem der vorangehenden Ansprüche, wobei das Einlegeelement (11) aus Stahl, Aluminium oder Magnesium ausgebildet ist.

5. Gehäuseteil (1a, 1b, 1c) nach einem der vorangehenden Ansprüche, wobei das erste Kunststoffelement (10) und das Einlegeelement (11) flächig stoffschlüssig miteinander verbunden sind.

6. Gehäuseteil (1a, 1b, 1c) nach einem der vorangehenden Ansprüche, wobei das erste Kunststoffelement (10) innenseitig und das Einlegeelement (11) außenseitig angeordnet ist, oder umgekehrt.

7. Gehäuseteil (1a, 1b, 1c) nach einem der vorangehenden Ansprüche, wobei das erste Kunststoffelement (10) das Einlegeelement (11) zumindest abschnittsweise, vorzugsweise zumindest im Wesentlichen, beidseitig umschließt.

8. Gehäuseteil (1a, 1b, 1c) nach einem der vorangehenden Ansprüche, wobei das erste Kunststoffelement (10) das Einlegeelement (11) abschnittsweise durchdringt.

9. Gehäuseteil (1a, 1b, 1c) nach einem der vorangehenden Ansprüche, wobei das Einlegeelement (11) zumindest im Wesentlichen, vorzugsweise vollständig, in das erste Kunststoffelement (10) eingebettet ist.

10. Gehäuseteil (1a, 1b, 1c) nach einem der Ansprüche 1 bis 8,
wobei das Einlegeelement (11) auf einer ersten flächigen Seite zumindest abschnittsweise, vorzugsweise zumindest im Wesentlichen, feststehend mit dem ersten Kunststoffelement (10) verbunden ist und
wobei das Einlegeelement (11) auf einer zweiten, der ersten Seite gegenüberliegenden flächigen Seite zumindest abschnittsweise, vorzugsweise zumindest im Wesentlichen, feststehend mit einem zweiten Kunststoffelement (12) verbunden ist.

11. Gehäuseteil (1a, 1b, 1c) nach Anspruch 10,
wobei das Einlegeelement (11) zwischen dem ersten Kunststoffelement (10) und dem zweiten Kunststoffelement (12) mittig angeordnet ist.

12. Gehäuseteil (1a, 1b, 1c) nach einem der vorangehenden Ansprüche, wobei das Einlegeelement (11) eine Dicke von ca. 1 mm aufweist.

13. Gehäuse (1), vorzugsweise Motorgehäuse (1),
mit wenigstens einem Gehäuseteil (1a, 1b, 1c) nach einem der vorangehenden Ansprüche.

14. Vorrichtung, vorzugsweise Elektromotor,
mit wenigstens einem Gehäuse (1), vorzugsweise einem Motorgehäuse (1), nach Anspruch 13.

15. Maschine oder Anlage, vorzugsweise Elektroauto,
mit wenigstens einer Vorrichtung, vorzugsweise einem Elektromotor, nach Anspruch 14.
